# NEUE EUROPÄISCHE PATENTSCHRIFT

(11) **EP 1 104 861 B2**
(45) Veröffentlichungstag und Bekanntmachung des Hinweises auf die Entscheidung über den Einspruch: **29.10.2008**
(45) Hinweis auf die Patenterteilung: 09.10.2002
(21) Anmeldenummer: 99123737.1
(22) Anmeldetag: 30.11.1999
(51) Int. Cl.: F16K 1/20

(54) **Rohranordnung mit schwenkbarer Absperrklappe**
Pipe system with a pivoting disc
Système de conduit avec un clapet pivotant

(43) Veröffentlichungstag der Anmeldung: 06.06.2001
(73) Patentinhaber: OHL Gutermuth Industriearmaturen GmbH, 63674 Altenstadt (DE)
(72) Erfinder: Röhrig, Wolfgang, 63791 Karlstein (DE)
(74) Vertreter: Quermann, Helmut

(56) Entgegenhaltungen:
- DE-A- 3 806 325
- DE-B- 1 675 507
- DE-C- 858 053
- DE-U- 8 217 779
- US-A- 1 824 168
- US-A- 3 257 045

## Beschreibung

Die Erfindung bezieht sich auf eine Rohranordnung mit einer schwenkbaren Absperrklappe. Derartige Rohranordnungen mit einer schwenkbaren Absperrklappe sind aus der US 3 257 045 A und DE-C-858 053 bekannt.

In der Praxis finden Rohranordnungen mit Absperrklappen Verwendung, bei denen ein Gehäuse zur Lagerung und Abdichtung der Absperrklappe sowie mit dem Gehäuse auf dessen einander abgewandten Seiten verbundene Rohrstücke vorgesehen sind. Die Rohrstücke weisen denselben Innendurchmesser auf und sind fluchtend positioniert. Das Medium strömt durch das stromaufwärts angeordnete Rohrstück, dann durch das Gehäuse, das die Absperrklappe aufnimmt und von dort durch das stromabwärts gelegene Rohrstück. Gelagert ist die Absperrklappe mittig oder außermittig im Gehäuse und wird in der Offenstellung beidseitig von dem die Rohranordnung durchströmenden Medium umströmt, womit die Absperrklappe das Medium in zwei Teilströme teilt. Nachteilig ist bei einer solchen Anordnung der hohe Strömungsverlust im Bereich der Absperrklappe und die große Verschleißanfälligkeit der Armatur, da das Medium nicht nur die eigentliche Absperrklappe kontaktiert, sondern auch deren auf der einen Seite der Absperrklappe befindlichen Lagerbereich. Die Folge ist eine nur unzureichende Standfestigkeit der Armatur.

Absperrarmaturen sind durchaus Medienströmen ausgesetzt, die Feststoffanteile enthalten, die folglich abrasiv wirken. Hierbei kann es sich um einen Ethylenstrom mit Koksanteil handeln. Der Medienstrom kann bei sehr hohen Temperaturen, beispielsweise 500 bis 600°C, gefördert werden, was eine weitere hohe Anforderung an die Standfestigkeit der Armatur stellt. Für derartige Anforderungen sind bekannte Absperrarmaturen, die eine Absperrklappe aufweisen, nur unzureichend ausgestattet, da die Absperrklappe in ihrer Offenstellung dem Medienstrom ausgesetzt ist.

Aus der DE 34 35 914 A1 ist eine Klappenventilanordnung für eine Rohrleitung, durch die Gase mit hoher Geschwindigkeit strömen, bekannt. Sie weist zwei in Achsrichtung der Rohrleitung hintereinander angeordnete Ventilklappen auf, deren Mittelebenen in der Offenstellung in einer gemeinsamen Längsebene der Rohrleitung liegen. Um den Strömungswiderstand der Klappen in der Offenstellung zu verringern, weisen die Ventilklappen in der Offenstellung paarweise ein stromlinienförmiges Gesamtprofil auf. Obwohl diese Klappen strömungsoptimiert sind, sind sie dennoch in ihrer Offenstellung dem Medienstrom ausgesetzt. Insbesondere die verjüngend ausgebildeten, der Strömungsrichtung des Medienstromes entgegengesetzten Enden der Klappen unterliegen bei Förderung eines Feststoffanteiles im Medienstrom einem hohen Verschleiß und bewirken damit eine verkürzte Standzeit der Armatur. Auch wird bei dieser Klappenventilanordnung der Medienstrom in mehrere Teilströme unterteilt, so daß erhöhte Strömungsverluste zu verzeichnen sind. Der bauliche Aufwand ist bei dieser Gestaltung sehr hoch.

Weitere Rohranordnungen mit Absperrklappe sind beispielsweise aus der DE 197 24 549 A1 und der EP 0 884 506 A1 bekannt.

Es ist Aufgabe der vorliegenden Erfindung, eine Rohranordnung mit Absperrklappe so weiterzubilden, daß sie bei einfacher baulicher Gestaltung sowohl strömungs- als auch verschleißoptimiert ist. Dies insbesondere unter dem Aspekt von im Medienstrom geförderter Feststoffanteile, die abrasiv wirken.

Gelöst wird die Aufgabe durch eine Rohranordnung mit einer schwenkbaren Absperrklappe gemäß den Merkmalen des Anspruchs 1.

Wesentlich ist bei der Erfindung somit der im Rohr außermittig angeordnete Strömungskörper. Die außermittige Anordnung des Strömungskörpers, somit die Anordnung des Strömungskörpers im Randbereich des Rohres, führt dazu, daß der Medienstrom ungeteilt durch die Rohranordnung geleitet wird. Der Strömungskörper reduziert den durchströmten Querschnitt der Rohranordnung zunächst und erweitert ihn dann wieder. Im Bereich des engsten durchströmten Querschnittes ist im Strömungskörper der Totraum zur Aufnahme der in Offenstellung befindlichen Absperrklappe vorgesehen. Im sich verjüngenden Querschnittsbereich wird das einströmende Medium zunächst beschleunigt und abgelenkt, und zwar von der Lagerstelle der Absperrklappe weg, so daß im Medium transportierte Feststoffanteile nicht gegen die in Offenstellung befindliche Absperrklappe gelangen können. Die Absperrklappe unterliegt in dieser Stellung somit keinem erhöhten Verschleiß durch den Medienstrom und die Feststoffanteile und es sind keine wesentlichen Strömungsverluste im Bereich der Absperrklappe zu verzeichnen, da diese in ihrer Offenstellung außerhalb der Strömung liegt. Die Absperrklappe ist vorzugsweise in ihrer Offenstellung so positioniert, daß ihre den Durchtrittsquerschnitt zugewandte Fläche mit der Oberfläche des Strömungskörpers übereinstimmt, womit die Absperrklappe an dieser Stelle quasi Bestandteil des Strömungskörpers ist. Zwischen der Absperrklappe und der Öffnung im Strömungskörper soll demzufolge auch nur ein geringer umlaufender Spalt vorhanden sein. In der Schließstellung ist die Absperrklappe senkrecht zur Längserstreckung der Rohranordnung orientiert.

Bevorzugt weist der Strömungskörper Querschnittselemente eines Venturikörpers auf. Der Eingangsbereich des Strömungskörpers ist damit als Düse ausgebildet, die einen sich stetig verjüngenden Rohrabschnitt beschreibt, so daß die Druckenergie der Strömung möglichst verlustfrei in Bewegungsenergie umgesetzt wird. Hinter der gedachten Absperrebene der Absperrklappe ist der Rohrquerschnitt in Art eines Diffusors ausgebildet, womit sich der Strömungsquerschnitt des Strömungskanals allmählich erweitert, so daß die vom engen zum weiten Querschnitt erfolgende Strömung eine Geschwindigkeitsverminderung bei gleichzeitigem Druckanstieg erfährt. Besonders gute Strömungsergebnisse, insbesondere ein äußerst geringer Druckabfall, gemessen zwischen dem Eingang und dem Ausgang der Rohranordnung, lassen sich erzielen, wenn der Strömungskörper den Rohrquerschnitt um 25 bis 50%, insbesondere 40 bis 50%, gegenüber dem Ausgangsrohrquerschnitt reduziert.

Die erfindungsgemäße Rohranordnung mit Absperrklappe ist für besonders hohe Temperaturen des Medienstromes einsetzbar, da die Absperrklappe in ihrer Offenstellung außerhalb des durchströmten Bereiches der Rohranordnung angeordnet ist. Gedacht ist beispielsweise an Temperaturen des Medienstromes von 500 bis 600°C. Um die Dichtanforderungen bei solchen Temperaturen zu beherrschen, ist die Absperrklappe vorzugsweise mit einer harten metallischen oder keramischen Dichtung versehen. Diese wirkt mit einer entsprechenden Gegendichtfläche des die Absperrklappe aufnehmenden Gehäuses zusammen. Je nach dem Anwendungsfall kann die Dichtung durchaus auch als flexible Weichdichtung ausgebildet sein.

Die Lagerung der Absperrklappe erfolgt bevorzugt außermittig, derart, daß bei in Schließstellung befindlicher Absperrklappe diese teilweise in den Totraum ragt. Diese Gestaltung ist vor dem Hintergrund zu sehen, daß die Absperrklappe ausschließlich Absperrfunktion im Sinne einer Stellung "offen" bzw. "zu" oder einer Sicherheitsfunktion im Sinne einer Rückschlagklappe besitzt. Die Sicherheitsfunktion erfolgt automatisch bei einem Druckabfall oder einer Umkehr der Strömungsrichtung. Die Absperrfunktion wird über ein externes Stellglied realisiert, insbesondere mittels eines elektromotorisch angetriebenen Stellgliedes. Die Lagerung der Absperrklappen erfolgt vorzugsweise über eine im wesentlichen vertikal orientierte Achse, die in einer horizontal orientierten Rohranordnung oben angeordnet ist. Wird kein Medienstrom durch die Rohranordnung gefördert, schwenkt die Klappe selbsttätig nach unten und verschließt die Rohrleitung.

Um eine Verwirbelung der Strömung im Bereich der Lagerstelle der Absperrklappe weitgehend zu eliminieren, ist vorgesehen, daß der Totraum auf seiner Rückseite ausgekleidet ist. Der Totraum sollte nach Möglichkeit nur so groß sein, daß er die Absperrklappe in ihrer Offenstellung und ihrer Sperrstellung sowie den Zwischenstellungen gerade aufnehmen kann.

um hohen Temperaturen des Medienstromes dauerhaft standhalten zu können, ist der Strömungskörper vorzugsweise mit einer Beschichtung oder einer Verkleidung, insbesondere mit einer stellitierten Verkleidung oder einer Keramikverkleidung versehen.

Gemäß einer besonderen Ausgestaltung ist vorgesehen, daß der rohrseitige Dichtbereich der Absperrklappe gegenüber dem stromaufwärtigen Rohrabschnitt zurückgesetzt angeordnet ist. Bei der lokalen Beschleunigung des Medienstromes im sich verjüngenden Querschnittsbereich der Rohranordnung wird der Medienstrom somit nicht nur an der in Offenstellung befindlichen Absperrklappe vorbeigefördert, sondern strömt auch am rohrseitigen Dichtbereich vorbei, da er zurückgesetzt angeordnet ist. Hierdurch wird wirksam ein Verschleiß des Dichtbereiches durch die mitströmenden Feststoffteile verhindert.

Gemäß der Erfindung sind ein Gehäuse zur Lagerung und Abdichtung der Absperrklappe, mit dem Gehäuse auf dessen einander abgewandten Seiten verschweißte Rohrstücke, im Bereich des einen stromaufwärts angeordneten Rohrstückes ein Düsenteil des Strömungskörpers und im Bereich des stromabwärts angeordneten Rohrstückes ein Diffusorteil des Strömungskörpers vorgesehen. Insbesondere bei dieser Gestaltung bietet sich eine Schweißkonstruktion an, bei der die Rohrstücke, bezogen auf deren Mittellängsachse, schräg zueinander und/oder seitlich versetzt zueinander angeordnet sind. Hierdurch läßt sich der Diffusoreffekt unterstützen, und es ist ein ausreichender Freiraum zwischen der Absperrklappe und dem stromabwärtigen Rohrstück beim Öffnen und Schließen der Absperrklappe sichergestellt. Auf besonders einfache Art und Weise läßt sich dies konstruktiv erfüllen, wenn die bei der Rohranordnung verwendeten Rohrstücke zwar denselben Rohrinnen- und Rohraußendurchmesser aufweisen, aber das stromabwärtige Rohrstück, im Gegensatz zum stromaufwärtigen Rohrstück, beidendig schräg abgeschnitten ist, so daß es schräg zwischen dem Gehäuse und einem stromabwärts angeordneten Verbindungsflansch befestigt werden kann. Zwischen diesem Verbindungsflansch und einem stromaufwärtigen, eingangs der Rohranordnung befindlichen weiteren Verbindungsflansch ist der Strömungskörper positioniert und nimmt so nahezu die gesamte Baulänge zwischen den beiden Rohrflanschen ein. Eine besonders einfache Konstruktion ergibt sich ferner, wenn das stromabwärts angeordnete Rohrteil in Kegelstumpfform oder in einem zylindrischen Rohrstück ausgeführt ist.

Gemäß einer zweckmäßigen Weiterbildung der Erfindung ist vorgesehen, daß dem Totraum eine Spüleinrichtung zugeordnet ist. Mittels der Spüleinrichtung kann eine Flüssigkeit oder ein Gas in den Totraum eingebracht werden und bewirkt, daß eventuell im Totraum abgelagerte Feststoffanteile aus dem Totraum in den durchströmten Bereich der Rohranordnung ausgespült werden. Die Spül- und Reinigungsmöglichkeit ist nicht darauf beschränkt, daß mittels einer externen Spüleinrichtung Feststoffanteile des Medienstromes aus dem Totraum gespült werden. Es ist gleichfalls möglich, an geeigneter Stelle eine weitere Öffnung im Totraum vorzusehen, durch die ein Teil des Medienstromes strömt und damit die Ablagerungen aus dem Totraum ausgetragen werden. Durch Anordnung des Totraumes oben können die Feststoffanteile grundsätzlich auch unter Einwirkung der Schwerkraft aus dem Totraum verbracht werden.

Als vorteilhaft wird es angesehen, wenn die Rohreinrichtung mit Absperrklappe zusätzlich eine Einrichtung zur Durchflußmessung aufweist. Dies kann in einfachster Art und Weise dadurch geschehen, daß am Anfang und am Ende der Rohranordnung ein Sensor vorgesehen ist. Die beiden Sensoren messen beispielsweise den Druck eingangs und ausgangs der Rohranordnung oder aber die Geschwindigkeit des die Rohranordnung durchströmenden Mediums am Eingang und am Ende der Rohranordnung. Hieraus kann der die Rohranordnung durchsetzende Volumenstrom errechnet werden. Die Sensoren können beispielsweise auf Druck- oder Infrarotbasis arbeiten.

Die Erfindung schlägt eine Rohranordnung mit Absperrklappe vor, die aufgrund der besonderen Anordnung des Strömungskörpers und der Aufnahme der Absperrklappe in deren Offenstellung in dem Totraum des Strömungskörpers sowie dem außerhalb des Beschleunigungsbereiches des Strömungsmediums angeordneten Dichtabschnitt strömungsoptimiert arbeitet und einen minimalen Verschleiß von Rückschlagklappe und Dichtbereich gewährleistet. Durch die Düsen-Diffusor-Eigenschaft arbeitet die Armatur bei kurzer Baulänge und geringem Druckverlust. Es erfolgt eine lokale Beschleunigung des Medienstromes am Sitzbereich und den Klappenbereich vorbei.

In den Figuren ist die Erfindung anhand zweier bevorzugter Ausführungsbeispiele dargestellt, ohne auf diese beschränkt zu sein. Es zeigt:
- Figur 1: einen Längsmittelschnitt der ersten Ausführungsform der Rohranordnung mit der Absperrklappe,
- Figur 2: eine Vorderansicht der in Figur 1 gezeigten Rohranordnung mit Absperrklappe,
- Figur 3: eine Rückansicht der in Figur 1 gezeigten Rohranordnung mit Absperrklappe, und
- Figur 4: einen Längsmittelschnitt einer zweiten Ausführungsform der Rohranordnung mit der Absperrklappe.

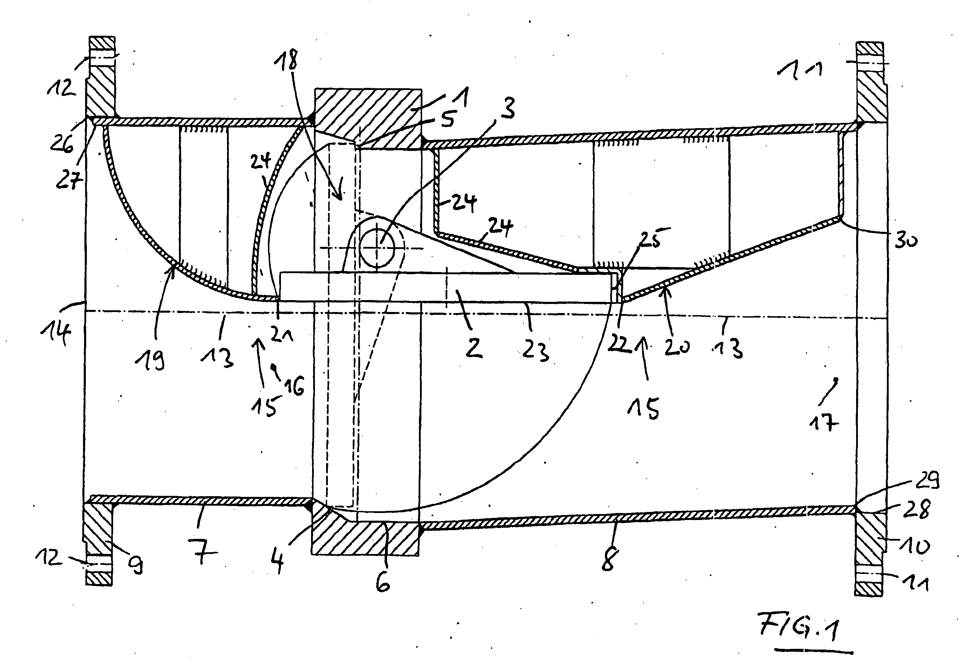

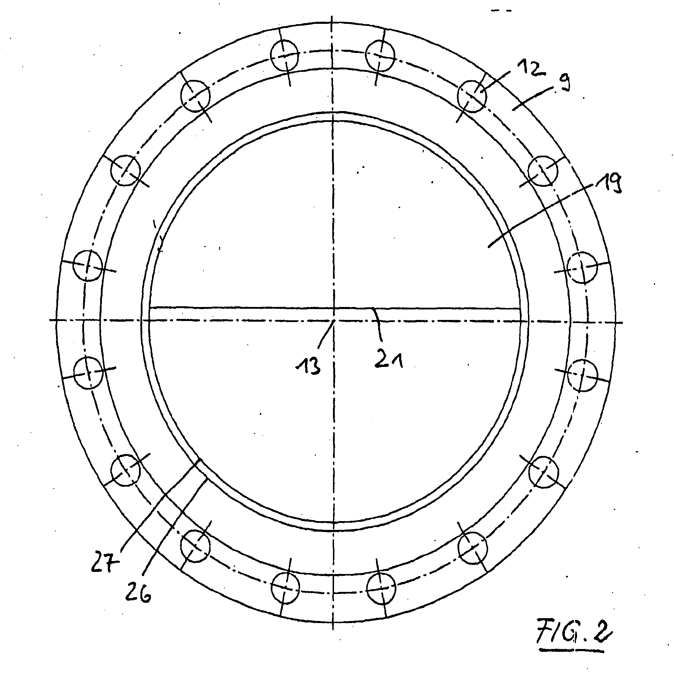

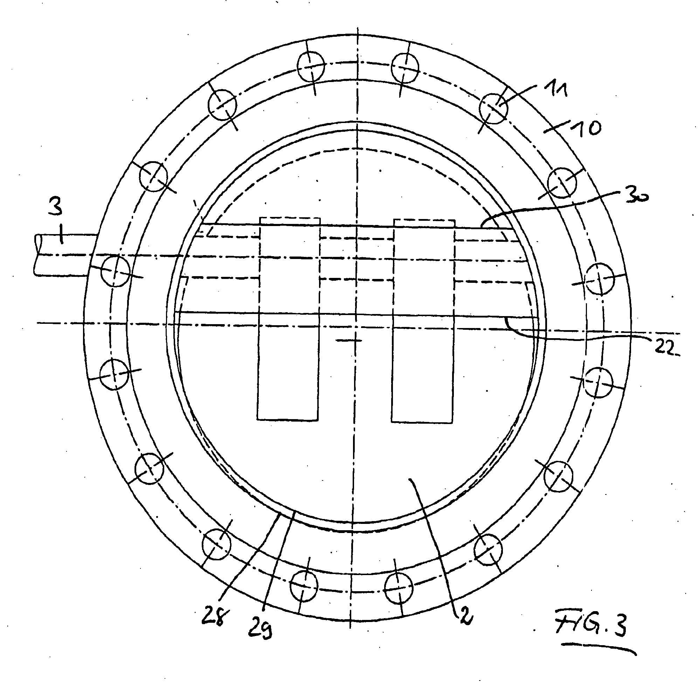

Die erfindungsgemäße Rohranordnung mit Absperrklappe gemäß der in den Figuren 1 bis 3 beschriebenen ersten Ausführungsform besteht aus Metall, soweit nachstehend nicht besondere Materialangaben spezifiziert sind. Die Gehäuseanordnung ist entsprechend der Darstellung in den Figuren angeordnet, d. h. in einer der Darstellung entsprechenden Einbaulage. Konkret ist in einem Gehäusering 1 eine Absperrklappe 2 außermittig um eine horizontale Welle 3 schwenkbar gelagert. Die Schwenkachse der Absperrklappe 2 befindet sich somit in der oberen Hälfte der Rohranordnung. Die Figuren 1 und 2 zeigen die Absperrklappe 2 in deren Offenstellung, die Figur 3 in deren Schließstellung. Die Welle 3 der Absperrklappe 2 ist im Bereich einer Seite des Gehäuseringes 1 aus diesem herausgeführt und mittels eines Stellantriebes um 90° zwischen der der Offenstellung der Absperrklappe entsprechenden Position und der der Schließstellung der Absperrklappe entsprechenden Position verschwenkbar. Aufgrund der Anordnung der Absperrklappe 2 im oberen Bereich des Gehäuseringes 1 und deren außermittigen Lagerung schließt die Absperrklappe 2 automatisch, wenn durch die Rohranordnung kein Medienstrom gefördert wird bzw. ein der vorgesehenen Förderrichtung entgegengesetzt gerichteter Medienstrom auftritt. Der Gehäusering 1 weist aufgrund der außermittigen Lagerung der Absperrklappe 2 einen Dichtbereich 4 auf, der im wesentlichen als umlaufende Schräge ausgebildet ist, die sich in dem der Welle 3 der Absperrklappe 2 gegenüberliegenden Dichtbereich in Strömungsrichtung des Medienstromes erweitert. Dort liegt die Absperrklappe in ihrer Schließstellung an dem konisch sich erweiternden Dichtbereich 4 an, während die Absperrklappe 2 im anderen, oberen Abschnitt des Gehäuseringes 1 diesen mit seinem in Strömungsrichtung vorlaufenden Bereich der Absperrklappe 2 an einem vertikalen Dichtabschnitt 5 kontaktiert. Die Absperrklappe 2 ist mit einer nicht veranschaulichten harten metallischen oder keramischen Dichtung versehen. An den umlaufenden, schrägen Dichtbereich 4 des Gehäuseringes 1 schließt sich ein parallel zur Strömungsrichtung des Mediums verlaufender Abschnitt 6 des Gehäuseringes 1 an.

Mit dem Gehäusering 1 sind zwei Rohrstücke 7 und 8 verschweißt. Das stromaufwärts angeordnete Rohrstück 7 besitzt eine relativ kurze Länge und ist gerade abgeschnitten, so daß die Eingangsöffnung und die Ausgangsöffnung dieses Rohrabschnittes 7 parallel verlaufen und senkrecht zur Längsmittelachse 13 des Rohrstückes 7 angeordnet sind. Das stromaufwärtige Ende des Rohrstückes 7 ist in einen Flanschring 9 eingesteckt und mit diesem verschweißt, während das stromabwärtige Ende des Rohrstückes 7 stirnseitig mit dem Gehäusering 1 verschweißt ist. Der Innendurchmesser des Rohrstückes 7 ist geringfügig größer als der Innendurchmesser des Gehäuseringes 1 eingangs des Dichtbereiches 4. Das Rohrstück 8 ist etwa doppelt so lang ausgebildet wie das Rohrstück 7, wobei beide Rohrstücke 7 und 8 denselben Innen- und Außendurchmesser aufweisen. Allerdings ist das Rohrstück 8 schräg abgeschnitten, mit parallel angeordneten Eingangs- und Ausgangsöffnungen, die allerdings unter einem Winkel zur Längsmittelachse des Rohrabschnittes 8 verlaufen, beispielsweise auf einem solchen von etwa 85°. Das schräge Rohrstück 8 ist im Bereich seiner Eingangsöffnung mit der Stirnseite des Gehäuseringes 1 verschweißt, wobei der Innendurchmesser des Rohrstückes 8 dem Innendurchmesser des Gehäuseringes 1 im Bereich des Abschnittes 6 entspricht. Im Bereich der Ausgangsöffnung ist das Rohrstück 8 in einen Flanschring 10 eingesteckt und mit diesem verschweißt. Die beiden Flanschringe 9 und 10 sind parallel zueinander angeordnet und besitzen fluchtende Bohrungen 11 und 12 zum Befestigen der Rohranordnung mit Absperrklappe in einem Rohrsystem.

Figur 1 veranschaulicht, daß der durchströmte Querschnitt der Rohranordnung eingangs der Rohranordnung, somit eingangs des Rohrstückes 7, dem Innendurchmesser des Rohrstückes 7 entspricht. Der durchströmte Rohrquerschnitt ist dort mit der Bezugsziffer 14 bezeichnet. Im Rohr, gebildet durch die beiden Rohrstücke 7 und 8 sowie den Gehäusering 1, ist oben außermittig ein Strömungskörper 15 angeordnet, der den durchströmten Eingangsquerschnitt 14 der Rohranordnung in Durchströmrichtung zunächst auf den Querschnitt im Bereich des Punktes 16 reduziert und dann auf den Querschnitt im Bereich des Punktes 17 erweitert. Der Strömungskörper 15 weist einen Totraum 18 auf, der die Absperrklappe 2 in deren Offenstellung aufnimmt. Dieser Strömungskörper 15 weist Querschnittselemente eines Venturikörpers auf. Er reduziert den eingangs durchströmten Querschnitt 14 wesentlich, d.h. durchaus um 40 bis 50%, wie es den Figuren zu entnehmen ist. Konkret ist dem stromaufwärts angeordneten Rohrstück 7 ein Düsenteil 19 des Strömungskörpers 15 und dem stromabwärts angeordneten Rohrstück 8 ein Diffusorteil 20 des Strömungskörpers 15 zugeordnet. Die dem durchströmenden Medium zugeordnete Kontur 21 des Düsenteiles 19 bzw. 22 des Diffusorteiles 20 liegt in einer Ebene mit der dem Medium zugewandten Fläche 23 der in Offenstellung befindlichen Absperrklappe 2. Der Strömungskörper 15 ist im Kontaktbereich mit dem durchströmenden Medium mit einer stellitierten Verkleidung oder einer Keramikverkleidung versehen. Der Totraum 18 weist auf seiner Rückseite eine Auskleidung in Art der Wandungsbereiche 24 auf. Der zwischen der in Offenstellung befindlichen Absperrklappe 2 und dem Strömungskörper 15 befindliche umlaufende Spalt ist so gering wie möglich gewählt, um sicherzustellen, daß bei in Offenstellung befindlicher Absperrklappe 2 möglichst wenig des das Rohr durchströmenden Mediums in den Totraum 18 ventiliert und zu Strömungsverlusten führt. Wie der Darstellung der Figuren zu entnehmen ist, ragt die Absperrklappe in ihrer Schließstellung teilweise in den Totraum 18 hinein. Die strichlierten Linien in Figur 1 zeigen die Schließstellung der Absperrklappe 2.

Die erfindungsgemäße Rohranordnung mit der Absperrklappe findet insbesondere im Zusammenhang mit Medienströmen Verwendung, die Feststoffe enthalten, womit die Gefahr des abrasiven Verschleißes der Funktionsteile der Rohranordnung mit Absperrklappe erhöht ist. Aufgrund der erfindungsgemäßen Gestaltung der Rohranordnung mit dem Strömungskörper 15 wird das Strömungsmedium im Düsenteil 19 beschleunigt, und zwar in eine solche Richtung, daß die im Medium transportieren Feststoffanteile weder die in Offenstellung befindliche Absperrklappe 2 noch den zurückversetzten Dichtbereich 4 des Gehäuseringes 1 kontaktieren. Im anschließenden Diffusorteil 20 wird der zunächst abgebaute Druck des Strömungsmediums wieder zurückgewonnen, und zwar im wesentlichen verlustfrei.

Der Innendurchmesser des Flanschringes 9 ist mit der Bezugsziffer 26, der Innendurchmesser des Flanschringes 7 mit der Bezugsziffer 27 bezeichnet. Der Innendurchmesser des Flanschringes 10 ist mit der Bezugsziffer 28 und der Innendurchmesser des Rohrstückes 8 mit der Bezugsziffer 29 bezeichnet. Mit der Bezugsziffer 30 ist die stromabwärtig befindliche, innere Kante des Diffusorteiles 20 bezeichnet.

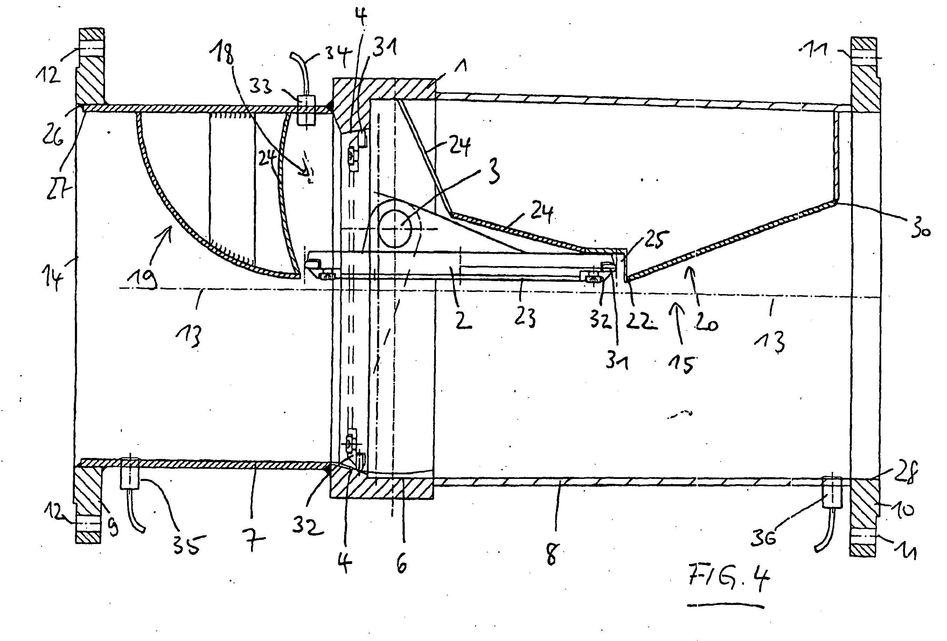

In der Figur 4 ist die zweite bevorzugte Ausführungsform der vorliegenden Erfindung beschrieben. Mit der Ausführungsform nach den Figuren 1 bis 3 übereinstimmende Teile sind in dieser Figur mit denselben Bezugsziffern bezeichnet. Wegen der grundsätzlichen Funktion der Rohranordnung mit Absperrklappe gemäß der Ausführungsform nach der Figur 4 wird auf die vorstehenden Ausführungen verwiesen.

Bei der Ausführungsform nach der Figur 4 ist ein veränderter Dichtbereich 4 vorgesehen. Die Absperrklappe 2 dichtet nicht am Dichtabschnitt 5 ab, sondern liegt mit ihrem Dichtungsring 31 an der sich in Strömungsrichtung konisch erweiternden Dichtfläche des Dichtbereichs 4 an. Der Dichtungsring 31 ist in eine Aussparung der Absperrklappe 2 eingesetzt und mittels eines mit der Absperrklappe 2 verschraubten Klemmringes 32 gehalten. Wie bei der Ausführungsform nach den Figuren 1 bis 3 ist bei der Ausführungsform nach der Figur 4 das Rohrstück 7, welches über seine Länge einen gleichbleibenden Durchmesser aufweist, gerade mit dem Gehäusering 1 verbunden. Im Unterschied ist bei der Ausführungsform nach der Figur 4 aber das stromabwärtige Rohrstück 8 gerade mit dem Gehäusering 1 verbunden, wobei das Rohrstück 8 sich stromabwärts konisch verjüngt. Die Rohrabschnitte 7 und 8 sind somit konzentrisch zur Achse 13 angeordnet.

Die Ausführungsform nach der Figur 4 weist zudem eine im Bereich des Totraumes 18 in das Rohrstück 7 eingesetzte Spüleinrichtung 33 mit einem externen Anschluß 34 zum Zuführen von Flüssigkeit oder Gas in den Totraum 14 auf. Beim Aktivieren der Spüleinrichtung werden Ablagerungen, die sich eventuell im Bereich des Totraumes 18 angesammelt haben, aus diesem gespült. Es ist ferner eine Sensoranordnung im Bereich des Inneren der Rohranordnung vorgesehen, um durch Ermittlung von Daten die Berechnung der Durchflußmenge vornehmen zu können. Konkret ist ein erster Sensor 35 im Eingangsbereich des Rohrabschnittes 7 und ein zweiter Sensor 36 im Ausgangsbereich des Rohrabschnittes 8 positioniert. Es kann sich bei den Sensoren beispielsweise um Druckaufnehmer handeln.

## Patentansprüche

1. Rohranordnung mit einer einzigen schwenkbaren Absperrklappe und einem dieser zugeordneten rohrseitigen Dichtbereich, wobei im Rohr (7, 1, 8) außermittig ein Strömungskörper (15) angeordnet ist, der den durchströmten Querschnitt der Rohranordnung in Durchströmrichtung zunächst reduziert und dann erweitert, wobei der Strömungskörper (15) einen Totraum (18) aufweist, der die Absperrklappe (2) in deren Offenstellung aufnimmt, wobei die Rohranordnung aufweist ein Gehäuse (1) zur Lagerung und Abdichtung der Absperrklappe (2), sowie mit dem Gehäuse (1) auf dessen einander abgewandten Seiten verschweißten Rohrstücken (7, 8), ferner im Bereich des einen, stromaufwärts angeordneten Rohrstücks (7) ein Düsenteil (19) des Strömungskörpers (9) und im Bereich des stromabwärts angeordneten Rohrstücks (8) ein Diffusorteil (20) des Strömungskörpers (15).
An diesen Patentanspruch 1 schließen sich die Unteransprüche 2 bis 7 und 9 bis 12 der EP 1 104 861 B1 an, wobei in den Unteransprüchen die Worte "**dadurch gekennzeichnet, dass**" durch "wobei" zu ersetzen sind und bezüglich der Ansprüche 9 bis 12 die Rückbeziehungen zu ändern sind.

2. Rohranordnung mit einer Absperrklappe nach Anspruch 1, wobei der Strömungskörper (15) Querschnittselemente eines Venturikörpers aufweist.

3. Rohranordnung mit einer Absperrklappe nach Anspruch 1 oder 2, wobei der Strömungskörper (15) den Rohrquerschnitt (16) um 25 bis 50%, insbesondere 40 bis 50%, gegenüber dem Ausgangsrohrquerschnitt (14) reduziert.

4. Rohranordnung mit einer Absperrklappe nach einem der Ansprüche 1 bis 3, wobei die Lagerung der Absperrklappe (2) außermittig erfolgt, derart, daß bei in Schließstellung befindlicher Absperrklappe (2) diese teilweise in den Totraum (18) ragt.

5. Rohranordnung mit einer Absperrklappe nach einem der Ansprüche 1 bis 4, wobei der Totraum (18) auf seiner Rückseite ausgekleidet ist.

6. Rohranordnung mit einer Absperrklappe nach einem der Ansprüche 1 bis 5, wobei die Absperrklappe (2) mit einer harten metallischen oder keramischen Dichtung oder flexiblen Weichdichtung versehen ist.

7. Rohranordnung mit einer Absperrklappe nach einem der Ansprüche 1 bis 6, wobei der rohrseitige Dichtbereich (4) der Absperrklappe (2) gegenüber dem stromaufwärtigen Rohrabschnitt (7) zurückgesetzt angeordnet ist.

8. Rohranordnung mit einer Absperrklappe nach Anspruch 7, wobei die Rohrstücke (7, 8), bezogen auf deren Mittellängsachse, schräg zueinander angeordnet sind und/oder seitlich versetzt zueinander angeordnet sind und/oder das stromabwärts angeordnete Rohrteil (8) in Kegelstumpfform oder in einem zylindrischen Rohrstück (8) ausgeführt ist.

9. Rohranordnung mit einer Absperrklappe nach einem der Ansprüche 1 bis 8, wobei der Strömungskörper (15) mit einer Beschichtung oder Verkleidung versehen ist, insbesondere mit einer stellitierten Verkleidung oder einer Keramikverkleidung versehen ist.

10. Rohranordnung mit einer Absperrklappe nach einem der Ansprüche 1 bis 9, wobei dem Totraum (18) eine Einrichtung zum Spülen des Totraums zugeordnet ist, insbesondere eine externe Spüleinrichtung (33).

11. Rohranordnung mit einer Absperrklappe nach einem der Ansprüche 1 bis 10, wobei die Rohranordnung mit Absperrklappe eine Einrichtung (35, 36) zur Durchflußmessung aufweist.

## Claims

1. A pipe system having a single pivoting shut-off valve and a sealing area associated with this on the pipe side, a flow element (15) being disposed eccentrically in the pipe (7, 1, 8), said flow element (15), in direction of flow, first reducing and then expanding the throughflow cross-section of the pipe system, wherein the flow element (15) includes a dead space (18) which accommodates the shut-off valve (2) in its open position, wherein the pipe system comprises a housing (1), for seating and sealing the shut-off valve (2), lengths of pipe (7, 8) welded to the housing (1) on its sides facing away from one another, also a nozzle component (19) of the flow element (15) in the region of the length of pipe (7) disposed upstream, and a diffuser component (20) of the flow element (15) in the region of the length of pipe (8) disposed downstream.

2. A pipe system having a shut-off valve according to Claim 1, wherein the flow element (15) has cross-sectional elements of a Venturi component.

3. A pipe system having a shut-off valve according to Claim 1 or 2, wherein the flow element (15) reduces the pipe's cross-section (16) by 25 to 50%, and in particular 40 to 50%, compared with the cross-section (14) of the outlet pipe.

4. A pipe system having a shut-off valve according to one of Claims 1 to 3, wherein the shut-off valve (2) is seated eccentrically in such a way that, when the shut-off valve (2) is in the closed position, this partly projects into the dead space (18).

5. A pipe system having a shut-off valve according to one of Claims 1 to 4, wherein the dead space (18) is covered on its rear side.

6. A pipe system having a shut-off valve according to one of Claims 1 to 5, wherein the shut-off valve (2) is provided with a hard metallic or ceramic seal or soft flexible seal.

7. A pipe system having a shut-off valve according to one of Claims 1 to 6, wherein the sealing area (4) of the shut-off valve (2) on the pipe side is set back or recessed compared with the section of pipe (7) disposed upstream.

8. A pipe system having a shut-off valve according to Claim 7, wherein the lengths of pipe (7, 8), relative to their median longitudinal axis, are disposed at an angle in relation to one another and/or are laterally offset in relation to one another and/or the section of pipe (8) disposed downstream is in the form of a truncated cone or a length of cylindrical pipe (8).

9. A pipe system having a shut-off valve according to one of Claims 1 to 8, wherein the flow element (15) is provided with a coating or covering, in particular a stellited covering or a ceramic covering.

10. A pipe system having a shut-off valve according to one of Claims 1 to 9, wherein a device for flushing the dead space, in particular an external flushing device (33), is associated with the dead space (18).

11. A pipe system having a shut-off valve according to one of Claims 1 to 10, wherein the pipe system with shut-off valve includes means (35, 36) for measuring the flow.

## Revendications

1. Agencement tubulaire comprenant un seul clapet d'arrêt apte à pivoter et une zone d'étanchéisation côté tube attribuée au premier cité, dans lequel un corps d'écoulement (15) est disposé en position excentrique dans le tube (7, 1, 8), qui d'abord réduit et ensuite augmente la superficie de la section de l'agencement tubulaire traversée par le courant dans la direction d'écoulement, dans lequel le corps d'écoulement (15) présente un espace nuisible (18) dans lequel vient se loger le clapet d'arrêt (2) dans la position d'ouverture de ce dernier, dans lequel l'agencement tubulaire présente un boîtier (1) pour le montage et l'étanchéisation du clapet d'arrêt (2), ainsi que des éléments tubulaires (7, 8) soudés au boîtier (1) sur les côtés de ce dernier qui se détournent l'un de l'autre, et encore une partie (19) du corps d'écoulement (15), en forme de buse, dans la zone du premier élément tubulaire (7) disposé en amont, et une partie (20) du corps d'écoulement (15), en forme de diffuseur dans la zone de l'élément tubulaire (8) disposé en aval.

2. Agencement tubulaire comprenant un clapet d'arrêt selon la revendication 1, dans lequel le corps d'écoulement (15) présente des éléments de section transversale d'un corps Venturi.

3. Agencement tubulaire comprenant un clapet d'arrêt selon la revendication 1 ou 2, dans lequel le corps d'écoulement (15) réduit la superficie de la section du tube (16) de 25 à 50 %, en particulier de 40 à 50 % par rapport à la superficie de la section du tube de départ (14).

4. Agencement tubulaire comprenant un clapet d'arrêt selon l'une quelconque des revendications 1 à 3, dans lequel le placement du clapet d'arrêt (2) en position excentrique a lieu de telle sorte que, dans la position de fermeture du clapet d'arrêt présent (2), celui-ci fait partiellement saillie dans l'espace nuisible (18).

5. Agencement tubulaire comprenant un clapet d'arrêt selon l'une quelconque des revendications 1 à 4, dans lequel l'espace nuisible (18) est muni d'un revêtement sur son côté dorsal.

6. Agencement tubulaire comprenant un clapet d'arrêt selon l'une quelconque des revendications 1 à 5, dans lequel le clapet d'arrêt (2) est muni d'une matière d'étanchéisation céramique ou métallique dure ou encore d'une étanchéisation douce flexible.

7. Agencement tubulaire comprenant un clapet d'arrêt selon l'une quelconque des revendications 1 à 6, dans lequel la zone d'étanchéisation (4) du clapet d'arrêt (2), côté tube, est disposée en retrait par rapport à la section tubulaire amont (7).

8. Agencement tubulaire comprenant un clapet d'arrêt selon la revendication 7, dans lequel les éléments tubulaires (7, 8), rapportés à l'axe longitudinal médian, sont disposés en inclinaison réciproque et/ou sont disposés en étant décalés les uns des autres en direction latérale et/ou l'élément tubulaire (8) disposé en aval est réalisé sous une forme tronconique ou sous la forme d'un élément tubulaire cylindrique (8).

9. Agencement tubulaire comprenant un clapet d'arrêt selon l'une quelconque des revendications 1 à 8, dans lequel le corps d'écoulement (15) est muni d'une enduction ou d'un revêtement, en particulier d'un revêtement rapporté en stellite ou d'un revêtement en céramique.

10. Agencement tubulaire comprenant un clapet d'arrêt selon l'une quelconque des revendications 1 à 9, **caractérisé en ce qu'**un mécanisme pour le rinçage de l'espace nuisible (18) est attribué à ce dernier, en particulier un mécanisme de rinçage externe (33).

11. Agencement tubulaire comprenant un clapet d'arrêt selon l'une quelconque des revendications 1 à 10, dans lequel l'agencement tubulaire présente un mécanisme (35, 36) pour la mesure du débit d'écoulement.
